(19) Europäisches Patentamt
European Patent Office
Office européen des brevets

(11) **EP 3 251 206 B1**

## (12) EUROPEAN PATENT SPECIFICATION

(45) Date of publication and mention
of the grant of the patent:
**14.10.2020 Bulletin 2020/42**

(21) Application number: **16701779.7**

(22) Date of filing: **27.01.2016**

(51) Int Cl.:
***H02M 7/49*** (2007.01)   ***H02M 5/22*** (2006.01)
***B60L 9/24*** (2006.01)

(86) International application number:
**PCT/EP2016/051714**

(87) International publication number:
**WO 2016/120335 (04.08.2016 Gazette 2016/31)**

(54) **IMPROVED METHOD FOR DETECTING A POWER REVERSAL IN A BI-DIRECTIONAL MODULAR CONVERTER**

VERBESSERTES VERFAHREN ZUR FESTSTELLUNG EINER LEISTUNGSFLUSSREVERSION IN EINEM BIDIREKTIONALEN MODULAREN UMRICHTER

PROCÉDÉ AMÉLIORÉ POUR LA DETECTION D'UNE INVERSION DE PUISSANCE DANS UN CONVERTISSEUR MODULAIRE BIDIRECTIONNEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.01.2015 EP 15153216**

(43) Date of publication of application:
**06.12.2017 Bulletin 2017/49**

(73) Proprietor: **ABB Schweiz AG
5400 Baden (CH)**

(72) Inventor: **RONNER, Beat
5436 Würenlos (CH)**

(74) Representative: **Zimmermann & Partner
Patentanwälte mbB
Postfach 330 920
80069 München (DE)**

(56) References cited:
**EP-A1- 2 703 208     WO-A2-2014/188249
US-A- 5 027 264     US-A1- 2007 086 222**

- **HIROFUMI AKAGI ET AL: "Control and Design of a Modular Multilevel Cascade BTB System Using Bidirectional Isolated DC/DC Converters", IEEE TRANSACTIONS ON POWER ELECTRONICS, INSTITUTE OF ELECTRICAL AND ELECTRONICS ENGINEERS, USA, vol. 26, no. 9, 1 September 2011 (2011-09-01), pages 2457-2464, XP011383353, ISSN: 0885-8993, DOI: 10.1109/TPEL.2011.2107752**

## Description

### FIELD OF THE INVENTION

The invention pertains to the field of power supplies for electric rail vehicles. It relates to a method for controlling a modular converter in accordance with the preamble of the independent patent claims.

### BACKGROUND OF THE INVENTION

For electric power supply of electric rail vehicles, e.g. trains or trams, modular converters comprising a plurality of converter cells configured to produce from an AC input voltage a DC output voltage which - for traction applications - may be supplied to a drive unit or motor unit of the electric rail vehicle, but also to electrical installations on-board have recently received growing attention. Usually, the AC input voltage is supplied from a line, in particular an overhead line.

Exemplary modular converters are, e.g., described in EP 2 703 208 A1, DE 102010044322 A1, and EP 820893 A2. The converters disclosed comprise a plurality of converter cells, connected in series on a primary side or line side of the modular converter, and in parallel on a secondary side or load side of the modular converter. Each converter cell comprises a resonant DC-to-DC converter, which is connected to the line via a primary AC-to-DC converter. In the resonant DC-to-DC converter, a DC-to-AC converter on the primary side is connected via a resonant transformer with a further AC-to-DC converter on the secondary side, in particular a motor side.

As may be seen from EP 2 703 208 A1, the primary AC-to-DC converter as well as both the DC-to-AC converter and the further AC-to-DC converter may be active converters capable of being operated in either a forward or in a reverse (or backward) direction, and may thus also be referred to as bi-directional converters. This is particularly important for traction applications, and may exemplary be achieved by semiconductor switches, which may be controlled by an appropriate control circuit. To allow for a power flow in the forward direction, i.e. from the primary to the secondary side of the converter cell, the DC-to-DC converter of said converter cell is operated in a first active operation state, in which the semiconductor switches of the DC-to-AC converter are pulsed by switching pulses applied by the control circuit. To allow for a power flow in the backward direction, i.e. from the secondary side of the converter cell to the primary side, the DC-to-DC converter of the converter cell is operated in a second active operation state, in which the semiconductor switches of the further AC-to-DC converter are pulsed by switching pulses applied by the control circuit.

One difficulty that often arises in an operation of a modular converter is determining an optimum condition or point in time at which to switch converter cells over between a first active operation state and a second active operation state, in particular for stand-alone modular converters having their own converter control system which is, in particular, separate from a traction control system of the drive unit. While a physical condition of motion of the electric rail vehicle may be used as an indication of an appropriate operation state in certain situations - first active operation state for acceleration and during steep ascents, second active operation state for deceleration and during steep descends - no helpful information may in general be derived from it in other situations, e.g. when the electric rail vehicle is coasting, in particular during slight descends.

However, if the DC-to-DC converter one or more converter cells is operated in an non-adequate active operation state for a prolonged amount of time, an unbalanced condition of the converter cell(s), and thus the of the modular converter, may arise, recovery from which may only be achieved by interrupting and/or restarting operation of the modular converter.

In particular, if the DC-to-DC converter of one or more converter cells is operated in the first active operation state for a prolonged amount of time while the drive unit or motor unit connected to the load side of the modular converter is generating electric energy, in particular due to deceleration and during steep descends, a DC-link capacitor connected to the secondary side of the converter cell will be charged to an undesired level, so that unacceptably large currents will flow if the converter cell is switched over to the second active operation state.

Likewise, if the DC-to-DC converter of one or more converter cells is operated in the second active operation state for a prolonged amount of time while the drive unit or motor unit connected to the load side of the modular converter is consuming electric energy, in particular due to acceleration and during steep ascends, the DC-link capacitor connected to the secondary side of the converter cell will be discharged to an undesired level, so that unacceptably large currents will flow if the converter cell is switched over to the first active operation state.

Document US 5,027,264 A describes a DC/DC power converter having an input converter and an output converter. Both input and output converters are composed of active gate controlled switching devices.

Document US 2007/086222 A1 describes a bi-directional DC/AC inverter having multiple power conversion units and a control unit for controlling respective operations of the multiple power conversion units.

Document WO 2014/188249 A describes a power conversion apparatus including a primary side circuit and a secondary side circuit magnetically coupled to the primary side circuit via a transformer.

The document "Control and Design of a Modular Multilevel Cascade BTB System Using Bidirectional Isolated DC/DC Converters" by Hirofumi Akagi and Ryohei Kitada, published in IEEE Transactions on Power Electronics, volume 26, issue: 9 on 1 Sept. 2011, describes the control of a system consisting of multiple converter cells connected in cascade per phase at both front ends.

It is an object of the invention to provide a method for controlling of a modular converter which overcomes the disadvantages as discussed above.

This object is achieved by a method in accordance with the independent patent claim.

## SUMMARY OF THE INVENTION

This object is achieved by the subject-matter of the independent patent claims 1 and 16. Further exemplary embodiments are evident from the dependent claims and the following description.

A method in accordance with the present invention for controlling a modular converter,

said modular converter comprising a plurality of M converter cells, each converter cell comprising

an AC-to-DC converter, a primary side of which represents a primary side of said converter cell, a DC-to-DC converter, a secondary side of which represents a secondary side of said converter cell; with a secondary side of said AC-to-DC converter and a primary side of said DC-to-DC converter connected in parallel with a first DC-link capacitor, a secondary side of said DC-to-DC converter connected to a second DC-link capacitor; wherein

each DC-to-DC converter is adapted to be operated in at least

a first active operation state, in which electric power may flow into the primary side and out of the secondary side of said DC-to-DC converter; and

a second active operation state, in which electric power may flow into the secondary side and out of the primary side of said DC-to-DC converter;

the primary sides of the converter cells are connected in series, with a first converter cell connected to a line, preferably a medium voltage line, providing an AC line voltage $U(t)$ having a peak value $\hat{U}$, and an $M$-th converter cell connected to a ground;

comprises the steps of:

repeatedly determining a switch-over indicator, switching at least one DC-to-DC converter between first and second operation state if the switch-over indicator fulfils a switch-over condition;

wherein

the switch-over indicator is determined based on one or more of the following quantities, said quantity or quantities preferably obtained by measurement:

one or more voltages at one or more first DC-link capacitors,
one or more voltages at one or more second DC-link capacitors,
a DC-to-DC converter current ($I_{conv}$) at a point between the first DC-link capacitor and the second DC-link capacitor of at least one converter cell, and/or
a load current ($I_{load}$) at a secondary side of the modular converter.

By means of a switch-over indicator as detailed above, an optimum condition or point in time at which to switch converter cells over between first and second active operation state may be determined even for the case of a stand-alone modular converter.

In a preferred variant of the method in accordance with the present invention, the switch-over condition is determined based one or more of the following electric quantities:

a) one or more voltages at one or more first DC-link capacitors,
b) one or more voltages at one or more second DC-link capacitors,
c) the DC-to-DC converter current ($I_{conv}$) at a point between the first DC-link capacitor and the second DC-link capacitor of at least one converter cell, and/or
d) the load current ($I_{load}$) at a secondary side of the modular converter;

wherein the quantity or the quantities are determined, preferably measured, during a no-load condition of the modular converter.

By determining a switch-over indicator as detailed above an optimum condition or point in time at which to switch converter cells over between first and second active operation state may be determined in a manner grossly insensitive to measurement inaccuracies related to involved electric quantities or production tolerances of converter components.

A further aspect of the invention relates to a controller of a modular converter according to claim 16, wherein the controller is adapted for performing the method as described in the above and in the following.

These and other aspects of the invention will become apparent from and elucidated with reference to the embodiments described hereinafter.

## BRIEF DESCRIPTION OF THE DRAWINGS

The subject matter of the invention will be explained in more detail in the following text with reference to exemplary embodiments which are illustrated in the attached drawings.

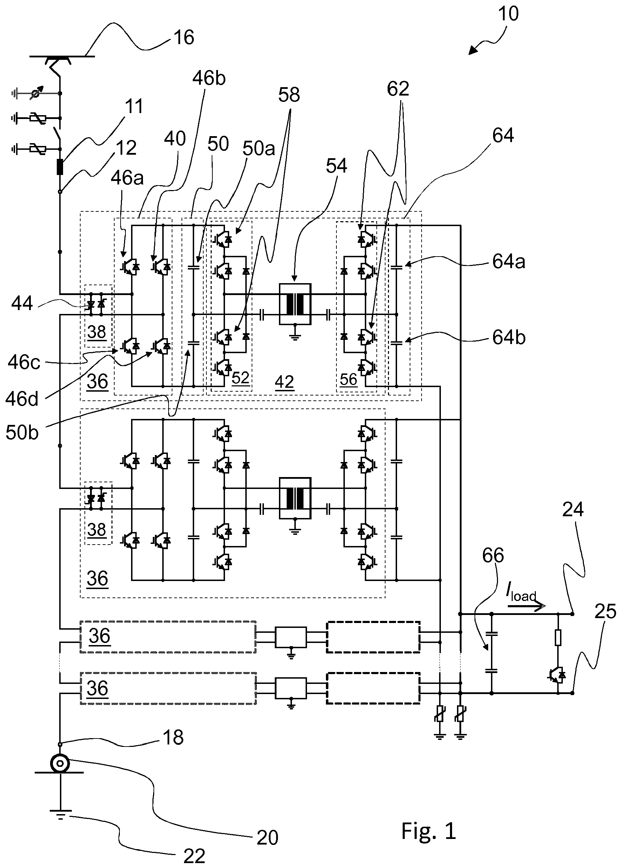

Fig. 1 schematically shows a modular converter for use with a method according to an embodiment of the invention.

In principle, identical reference symbols in the figures denote identical parts.

DETAILED DESCRIPTION OF EXEMPLARY EMBODIMENTS

Fig. 1 shows an exemplary modular converter 10 for an electric train or tram, which may also be referred to as power electronic transformer (PET) or power electronic traction transformer (PETT). In general, the modular converter may be adapted for transforming a medium AC voltage to a low or medium DC voltage. The converter has an input 12 which is connectable to a catenary or overhead line 16 via an input inductance 11 for supplying the converter 10 with a line voltage $U(t)$, said line voltage $U(t)$ having a peak value $\hat{U}$ and/or a root-mean-square value $U_g$ with, in general, $U_g = \hat{U}/\sqrt{2}$, in particular a medium-voltage AC input voltage, through a pantograph 14 and an inductor. The converter 10 comprises an earthing point 18 for connecting the converter 10 to an earth 22, e.g. through wheels 20 of the train or tram.

The modular converter 10 has a DC output comprising a positive DC output 24 and a negative DC output 25 for supplying a load of the train or tram with a DC output voltage. Exemplary, frequently used DC output voltages are 750V, 1.5kV or 3.0kV. The load may comprise an electric motor, generally connected to the DC output via a motor converter; electrical on-board installations; further converters and/or an auxiliary power supply. Preferably, an output DC-link capacitor 66 is provided between the positive DC output 24 and the negative DC output 25.

The converter 10 has a modular structure and comprises a plurality of $M$ converter cells 36, with each converter cell 36 being represented by a unique integer cell index $i$ with $i \in \{1; ...; M\}$. The converter cells 36 each comprise two input terminals and two output terminals; and thus are four-terminal converter cells connected in series on a primary side 32, i.e. connected in series between the input 12 and the earthing point 18 and in parallel on a secondary side 34, i.e. connected in parallel to the two outputs 24, 25.

Only the first and the second converter cell 36 are shown in detail.

Each converter cell 36 comprises a short-circuit switch 38, an AC-to-DC converter 40 and a DC-to-DC converter 42. By means of the short-circuit switch 38, the two input terminals of the converter cell 36 may be short circuited, thus putting the AC-to-DC converter 40 of the converter cell 36, and thus the whole converter cell 36, into a bypassed mode.

The AC-to-DC converter 40 is an active front end (AFE) with four power semiconductor switches 46a, 46b, 46c, 46d connected into an H-bridge. For each of the four power semiconductor switches 46a-d, a diode is connected in parallel in an opposite direction. The AC-to-DC converter 40 and the DC-to-DC converter 42 are connected via a primary side DC link, which comprises a primary side DC link capacitor 50, which in turn comprises a first sub-capacitor 50a and a second sub-capacitor 50b connected in series. For reasons of brevity, primary side DC link and primary side DC link capacitor 50 are simply referred to as DC link and DC link capacitor above and in what follows. An output of the DC-to-DC converter 42 of each converter cell 36 is connected in parallel with the outputs of the DC-to-DC converters 42 of the other converter cells 36. Input terminals of the AC-to-DC converter 40 are represented by, connectable to, or fixedly connected with input terminals of the converter cell 36. A primary side of the AC-to-DC converter 40 thus represents a primary side of the converter cell 36.

The DC-to-DC converter 42 is a resonant converter and comprises a DC-to-AC converter as a first side resonant sub-converter 52, and a further AC-to-DC converter as second side resonant sub-converter 56, with first side resonant sub-converter 52 and second side resonant sub-converter 56 coupled via a resonant tank or resonant transformer 54.

The first side resonant sub-converter 52 is connected to the DC link capacitor 50 and comprises an upper and a lower pair of power semiconductor switches 58 connected in series. A first input of the primary side of the transformer 54 is connected between the two pairs of power semiconductor switches 58. A second input of the primary side of the transformer 54 is connected via a capacitor 60 to a point between the first sub-capacitor 50a and the second first sub-capacitor 50b of the DC-link capacitor 50.

Likewise, the second side resonant sub-converter 56 comprises an upper and a lower pair of power semiconductor switches 62 connected in series, which are connected in parallel with a secondary side DC link with third sub-capacitor 64a and a fourth sub-capacitor 64b connected in series to form a secondary side DC-link capacitor 64. One input of the secondary side of the transformer 54 is connected between the two pairs of power semiconductor switches 62. The other input of the secondary side of the transformer 54 is connected between the capacitors.

Exemplary, all the power semiconductor switches 44, 46a-d, 58, 62 are IGBTs.

Each converter cell 36 may comprise a local controller (not shown in Fig. 1), which is adapted to control the semiconductor switches 44, 46a-d, 58, 62 of the respective converter cell 36. The local controllers may be communicatively interconnected with a main controller, which is adapted to control the local controllers. However, it is also possible that the main controller controls the semiconductor switches 44, 46a-d, 58, 62 directly. In particular, each of the semiconductor switches may independently be switched between a conducting and a blocking state by means of switching pulses applied by the controller.

When the modular converter is in operation under nominal conditions, the AC-to-DC converters 40 of at least a majority of the converter cells 36 are in a pulsed mode, i.e. the four power semiconductor switches 46a-d of each of the AC-to-DC converters 40 are repeatedly switched by the controllers in a switching pattern appropriate to ensure a sufficient flow of electric power from the line into the DC-link capacitor 50. In general, switching is done at time scales substantially smaller than a period of the AC grid voltage. Both AC-to-DC converters 40 as well as power semiconductor switches 46a, 46b, 46c, 46d are also referred to as "being pulsed", or briefly said to "be pulsed" when the the AC-to-DC converters 40 are in pulsed mode. Exemplary, the modular converter may be operated in a pulse width modulation (PWM) mode, so that for a sum over voltages $U_{DC,i}$ at each of the primary side DC-link capacitors 50 with $i \in \{1; ...; M\}$,

$$\sum_{i=1}^{M} U_{DC,i} \geq \hat{U} \text{ holds.}$$

Under a low load condition, in particular when a power $P$ consumed at the DC output is significantly smaller than a nominal or rated power $P_{nominal}$ of the modular converter, in particular when $10\,P < P_{nominal}$, the AC-to-DC converters 40 of at least some, preferably a of a majority of converter cells 36, may, at least intermittently, be operated in a diode mode, in which the four power semiconductor switches 46a-d are not pulsed.

A small number, e.g. one or two, of converter cells 36 may also be quasi-permanently bypassed, preferably by means of their short-circuit switches 38, to serve as backup in case of failure, breakdown or other defect of another converter cell.

Further, a subset of converter cells 36 may also be temporarily bypassed, in particular during low load condition. Preferably, this is achieved by means of the four power semiconductor switches 46a-d, e.g. by setting power semiconductor switches 46a and 46d into conducting state, but may also be achieved by means of the short-circuit switches 38,

In what follows, a converter cell (36) is referred to as being in active mode when its primary AC-to-DC converter (40) is in pulsed mode or diode mode, but not in bypassed mode.

When a converter cell 36 is in active mode, the DC-to-DC converter of said converter cell may be operated in a first active operation state, in which the semiconductor switches of the DC-to-AC converter are pulsed by switching pulses applied by the controller, or in a second active operation state, in which the semiconductor switches of the further AC-to-DC converter are pulsed by switching pulses applied by the controller. In the first active operation state, electric power may flow in a forward direction, i.e. from a primary to a secondary side of the DC-to-DC converter, but not in a reverse or backward direction, i.e. from the secondary side of the DC-to-DC converter. To allow for a power flow in the backward direction, i.e. from the secondary side of the converter cell to the primary side, the DC-to-DC converter of the converter cell is operated in a second active operation state, in which the semiconductor switches of the further AC-to-DC converter are pulsed by switching pulses applied by the control circuit.

To optimally allow for identification of a condition and/or point in time when to switch over between the first active operation state and the second active operation state, at least one of the following quantities is determined repeatedly, preferably constantly or permanently:

  a) one or more voltages at one or more first DC-link capacitors 50,

  b) one or more voltages measured at one or more second DC-link capacitors 64,

  c) a DC-to-DC converter current $I_{conv}$ measured at a point between the first DC-link capacitor 50 and the second DC-link capacitor 64 of at least one converter cell, and/or

  d) a load current $I_{load}$ measured at a secondary side of the modular converter;

e.g. through measurement by means of one or more appropriately located sensors.

A switch-over indicator is subsequently determined from the measured value or the measured values.

In an exemplary variant of the method in accordance with the invention, the switch-over indicator comprises a DC-link voltage ratio between a voltage or a sum of voltages measured at one or more first DC-link capacitors 50, respectively, and a voltage or a sum of voltages measured at one or more second DC-link capacitors 60, respectively. As the power P consumed at the DC output decreases, and possibly drops to zero when a no-load condition of the modular converter is reached, said voltage ratio generally increases under otherwise unchanged conditions, in particular as long as all converter cells 36 which are in active mode are operated in the first active operation state.

In an exemplary variant of the method in accordance with the invention, a switch-over condition may thus be deemed fulfilled when the DC-link voltage ratio exceeds a certain threshold, which threshold may be predetermined by theoretical and numerical considerations, in particular considerations based on a voltage transfer ratio of the resonant transformer 54, and possibly on further quantities. However, pre-determining an optimum threshold is not a trivial task either. This is owed to the fact that the optimum threshold depends strongly on the exact voltage transfer ratio of the resonant transformer 54, which in turn is subject to production tolerances, but may possibly also change over time due to environmental influences (e.g. temperature, humidity), and/or due to aging or wear, etc. Determining the optimum threshold is further complicated by the fact that changes in the DC-link voltage ratio are very subtle in a load regime close to the no-load condition. As a consequence, even relatively small measurement inaccuracies, which unavoidably occur when measuring the voltages at the DC-link capacitors, may lead to switching over to occur under inappropriate conditions and/or at inadequate points in time.

In a preferred, exemplary variant of the method in accordance with the invention, the switch-over condition is deemed fulfilled when the DC-link voltage ratio exceeds a certain threshold, wherein the threshold has been previously determined by measuring a DC-link voltage ratio between a voltage or a sum of voltages measured at one or more first DC-link capacitors 50, respectively, and a voltage or a sum of voltages measured at one or more second DC-link capacitors 60 during the no-load condition of the modular converter, and storing the DC-link voltage ratio thus obtained for subsequent use as a threshold.

By determining the threshold for the DC-link voltage ratio based on DC-link voltages measured during the no-load condition of the modular converter, an influence of production tolerances and measurement errors as discussed above may be greatly reduced, as resulting inaccuracies will influence both switch-over indicator and switch-over condition in a similar manner, so that their influence will ultimately cancel.

In an exemplary variant of the method in accordance with the invention, the modular converter is assumed to be in the no load condition when a load current $I_{load}$ at a DC output of the modular converter drops below a predetermined load current threshold $I_{th,load}$, i.e. when $| I_{load} | < I_{th,load}$. Preferably, the load current $I_{load}$ is determined by measurement. Alternatively, when direct measurements of the load current $I_{load}$ are not available, the load current $I_{load}$ may be determined otherwise, in particular by summing currents at a plurality of motor converters to which power may supplied through the DC output of the modular converter, Preferably, the no load condition may be assumed when a zero load current $I_{load}$ is measured, which generally indicates that the load current $I_{load}$ is smaller than a measurement tolerance of a current sensor or other current measuring equipment used for measuring said load current $I_{load}$.

In another exemplary variant of the method in accordance with the invention, the modular converter is assumed to be in the no load condition when a DC-to-DC converter current $I_{conv}$ drops below a predetermined DC-to-DC converter current threshold $I_{th,conv}$, i.e. when $| I_{conv} | < I_{th,conv}$; in particular when a zero DC-to-DC converter current is measured. A DC-to-DC converter current may, in particular, be determined by measuring a current at any point between the first DC-link capacitor 50 and the second DC-link capacitor 64 of a converter cell 36, in particular a DC current flowing between the primary side DC-link capacitor 50 and the power semiconductor switches 58, a DC current flowing between the power semiconductor switches 62 and the secondary side DC-link capacitor 64, an AC current flowing between the power semiconductor switches 58 and the resonant transformer 54, or an AC current flowing between the resonant transformer 54 and the power semiconductor switches 62. For an AC current, an effective current, peak current or current amplitude is preferably determined or measured.

In another exemplary variant of the method in accordance with the invention, the DC-to-DC converter current $I_{conv}$ may be determined as a sum of individual DC-to-DC converter currents $I_{conv,i}$, wherein, for a plurality of converter cells 36 with i e {1; ...; $M$}, each individual DC-to-DC converter current $I_{conv,i}$ is preferably obtained as described in the previous paragraph.

A further part of the description further defines the controller as comprising a control unit providing switching signals to said AC-to-DC converter and said DC-to-DC converter, implementing one or more variants of the low load control method as described in the above and in the following.

A further part of the description relates to a modular converter for supplying a DC output voltage to at least one, generally a plurality of, electrical motors, in general via a or a plurality of separate motor converters, in particular motor inverters. For example, the electrical motor may be the motor of a train or a tram. It has to be understood that features of the method as described in the above may be features of the modular converter and the controller as described in the above and in the following, and vice versa.

The modular converter may comprise a controller as described in the above and in the following. The controller or control unit may generate and provide switching signals to the AC-to-DC converter and to the DC-to-DC converter, in particular for pulsing of semiconductor switches comprised by said converters.

The AC-to-DC converter may be a full-bridge converter, which is adapted for converting a first side AC voltage into a first side DC voltage, or vice versa.

Each DC-to-DC converter may comprise a DC-to-AC sub-converter and an AC-to-DC sub-converter which are coupled via a transformer.

The DC-to-DC converter may be a resonant converter, which is adapted for converting the first DC voltage to a second DC voltage, or vice versa.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In particular, while in the modular converter as shown in Fig. 1, both first side resonant sub-converter 52 and second side resonant sub-converter 56 are 3-level converters arranged as 1-phase branches, each sub-converter may, in particular, alternatively be realised as a 2-level converter, and/or be arranged as an H-bridge. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

**Claims**

1. A method for controlling a modular converter (10),

> a) the modular converter (10) comprising a plurality of M converter cells (36), each converter cell comprising
>
>> i) an AC-to-DC converter (40), a primary side of which represents a primary side of said converter cell,
>> ii) a DC-to-DC converter (42), a secondary side of which represents a secondary side of said converter cell; with
>> iii) a secondary side of said AC-to-DC converter and a primary side of said DC-to-DC converter connected in parallel with a first DC-link capacitor (50),
>> iv) a secondary side of said DC-to-DC converter connected to a second DC-link capacitor (64); wherein
>
> b) each DC-to-DC converter (42) is adapted to be operated in at least
>
>> i) a first active operation state, in which electric power may flow into the primary side and out of the secondary side of said DC-to-DC converter; and
>> ii) a second active operation state, in which electric power may flow into the secondary side and out of the primary side of said DC-to-DC converter;
>
> c) the primary sides of the converter cells (36) are connected in series, with a first converter cell connected to a line (16) providing an AC line voltage $U(t)$ having a peak value $\hat{U}$, and an $M$-th converter cell connected to a ground (22);
>
> the method comprising the step of:
> d) repeatedly determining a switch-over indicator;
> **characterized in that** the method further comprises the step of:

> e) switching at least one DC-to-DC converter between first active operation state and second active operation state if the switch-over indicator fulfils a switch-over condition;
> **and in that**
> f) the switch-over indicator is determined based on one or more of the following quantities:
>
>> i) one or more voltages at one or more first DC-link capacitors (50),
>> ii) one or more voltages at one or more second DC-link capacitors (64),
>> iii) a DC-to-DC converter current ($I_{conv}$) at a point between the first DC-link capacitor (50) and the second DC-link capacitor (64) of at least one converter cell, and/or
>
> a load current ($I_{load}$) at a secondary side of the modular converter (10).

2. The method according to claim 1, further **characterized in that** the switch-over condition is determined based on one or more of the following quantities:

> a) one or more voltages at one or more first DC-link capacitors (50),
> b) one or more voltages at one or more second DC-link capacitors (64),
> c) the DC-to-DC converter current ($I_{conv}$) at a point between the first DC-link capacitor (50) and the second DC-link capacitor (64) of at least one converter cell, and/or
> d) the load current ($I_{load}$) at a secondary side of the modular converter;
>
> wherein the quantity or the quantities are determined during a no-load condition of the modular converter (10).

3. The method according to claim 2, wherein

> a) the switch-over indicator is determined based on one or more of the following quantities:
>
>> i) one or more voltages at one or more first DC-link capacitors (50),
>> ii) one or more voltages at one or more second DC-link capacitors (64), and/or
>> iii) a DC-to-DC converter current ($I_{conv}$) at a point between the first DC-link capacitor (50) and the second DC-link capacitor (64) of at least one converter cell; or
>> iv) the switch-over condition is determined based on one or more of the following quantities:
>> v) one or more voltages at one or more first DC-link capacitors (50),
vi) one or more voltages at one or more second DC-link capacitors (64), and/or
vii) the DC-to-DC converter current ($I_{conv}$) at a point between the first DC-link capacitor (50) and the second DC-link capacitor (64) of at least one converter cell.

4. The method according to claim 2 or 3, wherein the no-load condition of the modular converter is determined by

a) monitoring the load current ($I_{load}$); and
b) assuming that the modular converter is in no-load condition when the load current falls below a predetermined threshold.

5. The method according to claim 2, 3 or 4, wherein it is assumed that the modular converter is in the no load condition when a zero load current ($I_{load}$) is measured.

6. The method according to claim 2 or 3, wherein the no-load condition of the modular converter is determined by

a) monitoring the DC-to-DC converter current ($I_{conv}$); and
b) assuming that the modular converter is in no-load condition when the DC-to-DC converter current ($I_{conv}$) falls below a predetermined threshold.

7. The method according to claim 2, 3 or 4, wherein it is assumed that the modular converter is in the no load condition when a zero DC-to-DC converter current ($I_{conv}$) is measured.

8. The method according to one of the previous claims, further **characterized in that**

a) the switch-over condition is determined based on a ratio between

i) one or more voltages measured at one or more first DC-link capacitors (50), and
ii) one or more voltages measured at one or more second DC-link capacitors (54), wherein

b) said voltages are measured during the no-load condition of the modular converter (10).

9. The method according to one of the previous claims, further **characterized in that**

a) determining the switch-over condition comprises the steps of

i) measuring a first plurality of voltages at the first DC-link capacitors (50) of a first plurality of converter cells,
ii) measuring a second plurality of voltages at the second DC-link capacitors (64) of the first plurality of converter cells,
iii) computing a reference value from the measured pluralities of voltages,
iv) storing the reference value;

b) determining the switch-over indicator comprises the steps of

i) measuring the first plurality of voltages at the first DC-link capacitors (50) of the first plurality of converter cells,
ii) measuring the second plurality of voltages at the second DC-link capacitors (64) of the first plurality of converter cells,
iii) computing a comparison value from the measured pluralities of voltages,

c) determining whether the switch-over indicator fulfils the switch-over condition comprises

i) comparing the comparison value obtained in step b)ii) with the reference value stored in step a)iii).

10. The method according to the previous claim, further **characterized in that**

a) in step a)iii), the reference value is computed according to an arithmetic rule, and
b) in step b)iii), the comparison value is computed according to the same arithmetic rule.

11. The method according to one of the claims 9 or 10, further **characterized in that**

a) in step a)iii), the reference value is obtained by computing a ratio between a sum of the first plurality of voltages and the second plurality of voltages, and
b) in step b)iii), the comparison value is obtained by computing a ratio between a sum of the first plurality of voltages and the second plurality of voltages.

12. The method according to one of the previous claims, further **characterized in that** if the switch-over indicator fulfils the switch-over condition, a plurality of DC-to-DC converters (42) are switched over simultaneously.

13. The method according to claim 12, further **characterized in that** if the switch-over indicator fulfils the switch-over condition, the DC-to-DC converters (42) of all converter cells (36) which are in an active operation state are switched over simultaneously.

14. The method according to one of the previous claims, further **characterized in that**

    a) one or more of the DC-to-DC converters (42) comprises

        i) one or more first semiconductor switches (58) on the primary side,
        ii) one or more second semiconductor switches (62) on the secondary side, wherein

    b) in the first active operation state, the one or more first semiconductor switches (58) are pulsed, and
    c) in the second active operation state, the one or more second semiconductor switches (62) are pulsed.

15. The method according to one of the previous claims, further **characterized in that** the secondary sides of at least some of the converter cells (36) are connected in parallel on a secondary side of the modular converter.

16. A controller for controlling a modular converter (10),

    a) the modular converter (10) comprising a plurality of M converter cells (36), each converter cell comprising

        i) an AC-to-DC converter (40), a primary side of which represents a primary side of said converter cell,
        ii) a DC-to-DC converter (42), a secondary side of which represents a secondary side of said converter cell; with
        iii) a secondary side of said AC-to-DC converter and a primary side of said DC-to-DC converter connected in parallel with a first DC-link capacitor (50),
        iv) a secondary side of said DC-to-DC converter connected to a second DC-link capacitor (64); wherein

    b) each DC-to-DC converter (42) is adapted to be operated in at least

        i) a first active operation state, in which electric power may flow into the primary side and out of the secondary side of said DC-to-DC converter; and
        ii) a second active operation state, in which electric power may flow into the secondary side and out of the primary side of said DC-to-DC converter;

    c) the primary sides of the converter cells (36) are connected in series, with a first converter cell connected to a line (16) providing an AC line voltage $U(t)$ having a peak value $\hat{U}$, and an $M$-th converter cell connected to a ground (22);

    **characterized in that** the controller is configured to perform the method according to one of claims 1 through 15.

**Patentansprüche**

1. Verfahren zum Steuern eines modularen Umrichters (10),

    a) wobei der modulare Umrichter (10) eine Vielzahl von $M$ Umrichterzellen (36) umfasst, wobei jede Umrichterzelle umfasst:

        i) einen AC-DC-Umrichter (40), der eine Primärseite aufweist, die eine Primärseite der Umrichterzelle verkörpert,
        ii) einen DC-DC-Umrichter (42), der eine Sekundärseite aufweist, die eine Sekundärseite der Umrichterzelle verkörpert; wobei
        iii) eine Sekundärseite des AC-DC-Umrichters und eine Primärseite des DC-DC-Umrichters mit einem ersten DC-Verbindungskondensator (50) parallel geschaltet sind,
        iv) eine Sekundärseite des DC-DC-Umrichters mit einem zweiten DC-Verbindungskondensator (64) verbunden ist; wobei:

    b) wobei jeder DC-DC-Umrichter (42) ausgelegt ist, um in mindestens einem der Folgenden betrieben zu werden:

        i) einem ersten aktiven Betriebszustand, in dem ein elektrischer Strom in die Primärseite und aus der Sekundärseite des DC-DC-Umrichters fließen kann; und
        ii) einem zweiten aktiven Betriebszustand, in dem ein elektrischer Strom in die Sekundärseite und aus der Primärseite des DC-DC-Umrichters fließen kann;

    c) wobei die Primärseiten der Umrichterzellen (36) in Reihe geschaltet sind, wobei eine erste Umrichterzelle mit einer Leitung (16) verbunden ist, die eine AC-Leitungsspannung $U(t)$ bereitstellt, die einen Spitzenwert $\hat{U}$ aufweist, und wobei eine $M$-te Umrichterzelle mit einer Erdung (22) verbunden ist;

    wobei das Verfahren den folgenden Schritt umfasst:

d) wiederholtes Ermitteln einer Umschaltanzeige; **dadurch gekennzeichnet, dass** das Verfahren außerdem den folgenden Schritt umfasst:

e) Umschalten mindestens eines DC-DC-Umrichters zwischen einem ersten aktiven Betriebszustand und einem zweiten aktiven Betriebszustand, wenn die Umschaltanzeige eine Umschaltbedingung erfüllt; und dadurch, dass

f) die Umschaltanzeige aufgrund einer oder mehrerer der folgenden Größen ermittelt wird:

i) einer oder mehrerer Spannungen an einem oder mehreren ersten DC-Verbindungskondensatoren (50),
ii) einer oder mehrerer Spannungen an einem oder mehreren zweiten DC-Verbindungskondensatoren (64),
iii) eines DC-DC-Umrichterstroms ($I_{conv}$) von mindestens einer Umrichterzelle an einem Punkt zwischen dem ersten DC-Verbindungskondensator (50) und dem zweiten DC-Verbindungskondensator (64), und/oder

eines Laststroms ($I_{load}$) an einer Sekundärseite des modularen Umrichters (10).

2. Verfahren nach Anspruch 1, das außerdem **dadurch gekennzeichnet ist, dass** die Umschaltbedingung aufgrund einer oder mehrerer der folgenden Größen ermittelt wird:

a) einer oder mehrerer Spannungen an einem oder mehreren ersten DC-Verbindungskondensatoren (50),
b) einer oder mehrerer Spannungen an einem oder mehreren zweiten DC-Verbindungskondensatoren (64),
c) eines DC-DC-Umrichterstroms ($I_{conv}$) von mindestens einer Umrichterzelle an einem Punkt zwischen dem ersten DC-Verbindungskondensator (50) und dem zweiten DC-Verbindungskondensator (64), und/oder
d) eines Laststroms ($I_{load}$) an einer Sekundärseite des modularen Umrichters;

wobei die Größe oder die Größen während einer lastfreien Bedingung des modularen Umrichters (10) ermittelt werden.

3. Verfahren nach Anspruch 2, wobei:

a) die Umschaltanzeige aufgrund einer oder mehrerer der folgenden Größen ermittelt wird:

i) einer oder mehrerer Spannungen an einem oder mehreren der ersten DC-Verbindungskondensatoren (50),
ii) einer oder mehrerer Spannungen an einem oder mehreren zweiten DC-Verbindungskondensatoren (64), und/oder
iii) eines DC-DC-Umrichterstroms ($I_{conv}$) von mindestens einer Umrichterzelle an einem Punkt zwischen dem ersten DC-Verbindungskondensator (50) und dem zweiten DC-Verbindungskondensator (64); oder
iv) die Umschaltbedingung aufgrund einer oder mehrerer der folgenden Größen ermittelt wird:

v) einer oder mehrerer Spannungen an einem oder mehreren ersten DC-Verbindungskondensatoren (50),
vi) einer oder mehrerer Spannungen an einem oder mehreren zweiten DC-Verbindungskondensatoren (64), und/oder
vii) eines DC-DC-Umrichterstroms ($I_{conv}$) von mindestens einer Umrichterzelle an einem Punkt zwischen dem ersten DC-Verbindungskondensator (50) und dem zweiten DC-Verbindungskondensator (64).

4. Verfahren nach Anspruch 2 oder 3, wobei die lastfreie Bedingung des modularen Umrichters ermittelt wird durch:

a) Überwachen des Laststroms ($I_{load}$); und
b) Annehmen, dass sich der modulare Umrichter in einer lastfreien Bedingung befindet, wenn der Laststrom unter einen vorbestimmten Schwellenwert fällt.

5. Verfahren nach Anspruch 2, 3 oder 4, wobei angenommen wird, dass sich der modulare Umrichter in der lastfreien Bedingung befindet, wenn ein Nulllaststrom ($I_{load}$) gemessen wird.

6. Verfahren nach Anspruch 2 oder 3, wobei die lastfreie Bedingung des modularen Umrichters ermittelt wird durch:

a) Überwachen des DC-DC-Umrichterstroms ($I_{conv}$); und
b) Annehmen, dass sich der modulare Umrichter in einer lastfreien Bedingung befindet, wenn der DC-DC-Umrichterstrom ($I_{conv}$) unter einen vorbestimmten Schwellenwert fällt.

7. Verfahren nach Anspruch 2, 3 oder 4, wobei angenommen wird, dass sich der modulare Umrichter in der lastfreien Bedingung befindet, wenn ein Null-DC-DC-Umrichterstrom ($I_{conv}$) gemessen wird.

8. Verfahren nach einem der vorhergehenden Ansprüche, das außerdem **dadurch gekennzeichnet ist,**

**dass**

a) die Umschaltbedingung ermittelt wird aufgrund eines Verhältnisses zwischen:

i) einer oder mehreren Spannungen, die an einem oder mehreren ersten DC-Verbindungskondensatoren (50) gemessen werden, und
ii) einer oder mehrerer Spannungen, die an einem oder mehreren zweiten DC-Verbindungskondensatoren (54) gemessen werden, wobei

b) die Spannungen während einer lastfreien Bedingung des modularen Umrichters (10) gemessen werden.

9. Verfahren nach einem der vorhergehenden Ansprüche, das außerdem **dadurch gekennzeichnet ist, dass**:

a) das Ermitteln der Umschaltbedingung die folgenden Schritte umfasst:

i) Messen einer ersten Vielzahl von Spannungen an den ersten DC-Verbindungskondensatoren (50) einer ersten Vielzahl von Umrichterzellen,
ii) Messen einer zweiten Vielzahl von Spannungen an den zweiten DC-Verbindungskondensatoren (64) der ersten Vielzahl von Umrichterzellen,
iii) Berechnen eines Referenzwerts aus den gemessenen Vielzahlen von Spannungen,
iv) Speichern des Referenzwerts;

b) das Ermitteln der Umschaltanzeige die folgenden Schritte umfasst:

i) Messen der ersten Vielzahl von Spannungen an den ersten DC-Verbindungskondensatoren (50) der ersten Vielzahl von Umrichterzellen,
ii) Messen der zweiten Vielzahl von Spannungen an den zweiten DC-Verbindungskondensatoren (64) der ersten Vielzahl von Umrichterzellen,
iii) Berechnen eines Vergleichswerts aus den gemessenen Vielzahlen von Spannungen,

c) das Ermitteln, ob die Umschaltanzeige die Umschaltbedingung erfüllt, umfasst:

i) Vergleichen des Vergleichswerts, der im Schritt b) ii) erhalten wird, mit dem Referenzwert, der im Schritt a) iii) gespeichert wird.

10. Verfahren nach dem vorhergehenden Anspruch, das außerdem **dadurch gekennzeichnet ist, dass**:

a) im Schritt a) iii) der Referenzwert gemäß einer arithmetischen Regel berechnet wird, und
b) im Schritt b) iii) der Vergleichswert gemäß der gleichen arithmetischen Regel berechnet wird.

11. Verfahren nach einem der Ansprüche 9 oder 10, das außerdem **dadurch gekennzeichnet ist, dass**:

a) im Schritt a) iii) der Referenzwert erhalten wird, indem ein Verhältnis zwischen einer Summe der ersten Vielzahl von Spannungen und der zweiten Vielzahl von Spannungen berechnet wird, und
b) im Schritt b) iii) der Vergleichswert erhalten wird, indem ein Verhältnis zwischen einer Summe der ersten Vielzahl von Spannungen und der zweiten Vielzahl von Spannungen berechnet wird.

12. Verfahren nach einem der vorhergehenden Ansprüche, das außerdem **dadurch gekennzeichnet ist, dass**, wenn die Umschaltanzeige die Umschaltbedingung erfüllt, eine Vielzahl von DC-DC-Umrichtern (42) gleichzeitig umgeschaltet werden.

13. Verfahren nach Anspruch 12, das außerdem **dadurch gekennzeichnet ist, dass**, wenn die Umschaltanzeige die Umschaltbedingung erfüllt, die DC-DC-Umrichter (42) von allen Umrichterzellen (36), die sich in einem aktiven Betriebszustand befinden, gleichzeitig umgeschaltet werden.

14. Verfahren nach einem der vorhergehenden Ansprüche, das außerdem **dadurch gekennzeichnet ist, dass**:

a) einer oder mehrere der DC-DC-Umrichter (42) umfassen:

i) einen oder mehrere erste Halbleiterschalter (58) auf der Primärseite,
ii) einen oder mehrere zweite Halbleiterschalter (62) auf der Sekundärseite, wobei

b) in dem ersten aktiven Betriebszustand, der eine oder die mehreren ersten Halbleiterschalter (58) gepulst werden, und
c) in dem zweiten aktiven Betriebszustand, der eine oder die mehreren zweiten Halbleiterschalter (62) gepulst werden.

15. Verfahren nach einem der vorhergehenden Ansprüche, das außerdem **dadurch gekennzeichnet ist,**

**dass** die Sekundärseiten von mindestens einigen der Umrichterzellen (36) auf einer Sekundärseite des modularen Umrichters parallel geschaltet sind.

16. Steuereinheit zum Steuern eines modularen Umrichters (10), wobei:

a) der modulare Umrichter (10) eine Vielzahl von *M* Umrichterzellen (36) umfasst, wobei jede Umrichterzelle umfasst:

i) einen AC-DC-Umrichter (40), der eine Primärseite aufweist, die eine Primärseite der Umrichterzelle verkörpert,

ii) einen DC-DC-Umrichter (42), der eine Sekundärseite aufweist, die eine Sekundärseite der Umrichterzelle verkörpert; wobei

iii) eine Sekundärseite des AC-DC-Umrichters und eine Primärseite des DC-DC-Umrichters mit einem DC-Verbindungskondensator (50) parallel geschaltet sind,

iv) eine Sekundärseite des DC-DC-Umrichters mit einem DC-Verbindungskondensator (64) verbunden ist; wobei

b) jeder DC-DC-Umrichter (42) ausgelegt ist, um in mindestens einem der Folgenden betrieben zu werden:

i) einem ersten aktiven Betriebszustand, in dem ein elektrischer Strom in die Primärseite und aus der Sekundärseite des DC-DC-Umrichters fließen kann; und

ii) einem zweiten aktiven Betriebszustand, in dem ein elektrischer Strom in die Sekundärseite und aus der Primärseite des DC-DC-Umrichters fließen kann;

c) die Primärseiten der Umrichterzellen (36) in Reihe geschaltet sind, wobei eine erste Umrichterzelle mit einer Leitung (16) verbunden ist, die eine AC-Leitungsspannung *U(t)* bereitstellt, die einen Spitzenwert *Û* aufweist, und wobei eine *M*-te Umrichterzelle mit einer Erdung (22) verbunden ist; **dadurch gekennzeichnet, dass** die Steuereinheit konfiguriert ist zum Ausführen des Verfahrens nach einem der Ansprüche 1 bis 15.

**Revendications**

1. Procédé pour commander un convertisseur modulaire (10),

a) le convertisseur modulaire (10) comprenant une pluralité de *M* cellules de convertisseur (36), chaque cellule de convertisseur comprenant

i) un convertisseur CA/CC (40), dont un côté primaire représente un côté primaire de ladite cellule de convertisseur,

ii) un convertisseur CC/CC (42), dont un côté secondaire représente un côté secondaire de ladite cellule de convertisseur ; avec

iii) un côté secondaire dudit convertisseur CA/CC et un côté primaire dudit convertisseur CC/CC reliés en parallèle à un premier condensateur de liaison CC (50),

iv) un côté secondaire dudit convertisseur CC/CC relié à un deuxième condensateur de liaison CC (64) ; dans lequel

b) chaque convertisseur CC/CC (42) est conçu pour être utilisé dans au moins

i) un premier état de fonctionnement actif, dans lequel de l'énergie électrique peut entrer dans le côté primaire et sortir du côté secondaire dudit convertisseur CC/CC ; et

ii) un deuxième état de fonctionnement actif, dans lequel de l'énergie électrique peut entrer dans le côté secondaire et sortir du côté primaire dudit convertisseur CC/CC ;

c) les côtés primaires des cellules de convertisseur (36) sont reliés en série, avec une première cellule de convertisseur reliée à une ligne (16) fournissant une tension de ligne CA *U(t)* ayant une valeur de crête *Û*, et une *M*-ième cellule de convertisseur reliée à une terre (22) ;

le procédé comprenant l'étape consistant à :
d) déterminer répétitivement un indicateur de commutation ;
le procédé étant **caractérisé en ce qu'il** comprend également l'étape consistant à :

e) commuter au moins un convertisseur CC/CC entre le premier état de fonctionnement actif et le deuxième état de fonctionnement actif si l'indicateur de commutation vérifie une condition de commutation ;
**et en ce que**
f) l'indicateur de commutation est déterminé d'après une ou plusieurs des quantités suivantes :

i) une ou plusieurs tensions sur un ou plusieurs premiers condensateurs de liaison CC (50),

ii) une ou plusieurs tensions sur un ou plusieurs deuxièmes condensateurs de liaison CC (64),

iii) un courant de convertisseur CC/CC ($I_{conv}$) en un point situé entre le premier condensateur de liaison CC (50) et le deuxième condensateur de liaison CC (64) d'au moins une cellule de convertisseur, et/ou

un courant de charge ($I_{load}$) sur un côté secondaire du convertisseur modulaire (10).

2. Procédé selon la revendication 1, également **caractérisé en ce que** la condition de commutation est déterminée d'après une ou plusieurs des quantités suivantes :

a) une ou plusieurs tensions sur un ou plusieurs premiers condensateurs de liaison CC (50),
b) une ou plusieurs tensions sur un ou plusieurs deuxièmes condensateurs de liaison CC (64),
c) le courant de convertisseur CC/CC ($I_{conv}$) en un point situé entre le premier condensateur de liaison CC (50) et le deuxième condensateur de liaison CC (64) d'au moins une cellule de convertisseur, et/ou
d) le courant de charge ($I_{load}$) sur un côté secondaire du convertisseur modulaire ;

la quantité ou les quantités étant déterminées au cours d'un état d'absence de charge du convertisseur modulaire (10).

3. Procédé selon la revendication 2, dans lequel

a) l'indicateur de commutation est déterminé d'après une ou plusieurs des quantités suivantes :

i) une ou plusieurs tensions sur un ou plusieurs premiers condensateurs de liaison CC (50),
ii) une ou plusieurs tensions sur un ou plusieurs deuxièmes condensateurs de liaison CC (64), et/ou
iii) un courant de convertisseur CC/CC ($I_{conv}$) en un point situé entre le premier condensateur de liaison CC (50) et le deuxième condensateur de liaison CC (64) d'au moins une cellule de convertisseur, ou
iv) la condition de commutation étant déterminée d'après une ou plusieurs des quantités suivantes :
v) une ou plusieurs tensions sur un ou plusieurs premiers condensateurs de liaison CC (50),
vi) une ou plusieurs tensions sur un ou plusieurs deuxièmes condensateurs de liaison CC (64), et/ou
vii) le courant de convertisseur CC/CC ($I_{conv}$) en un point situé entre le premier condensateur de liaison CC (50) et le deuxième condensateur de liaison CC (64) d'au moins une cellule de convertisseur.

4. Procédé selon la revendication 2 ou 3, dans lequel l'état d'absence de charge du convertisseur modulaire est déterminé en

a) surveillant le courant de charge ($I_{load}$) ; et
b) en considérant que le convertisseur modulaire est dans l'état d'absence de charge lorsque le courant de charge chute au-dessous d'un seuil prédéterminé.

5. Procédé selon la revendication 2, 3 ou 4, dans lequel on considère que le convertisseur modulaire est dans l'état d'absence de charge lorsque l'on mesure une valeur nulle pour le courant de charge ($I_{load}$).

6. Procédé selon la revendication 2 ou 3, dans lequel l'état d'absence de charge du convertisseur modulaire est déterminé en

a) surveillant le courant de convertisseur CC/CC ($I_{conv}$) ; et
b) en considérant que le convertisseur modulaire est dans l'état d'absence de charge lorsque le courant de convertisseur CC/CC ($I_{conv}$) chute au-dessous d'un seuil prédéterminé.

7. Procédé selon la revendication 2, 3 ou 4, dans lequel on considère que le convertisseur modulaire est dans l'état d'absence de charge lorsque l'on mesure une valeur nulle pour le courant de convertisseur CC/CC ($I_{conv}$).

8. Procédé selon l'une des revendications précédentes, également **caractérisé en ce que**

a) la condition de commutation est déterminée d'après un rapport entre

i) une ou plusieurs tensions mesurées sur un ou plusieurs premiers condensateurs de liaison CC (50), et
ii) une ou plusieurs tensions mesurées sur un ou plusieurs deuxièmes condensateurs de liaison CC (54),

b) lesdites tensions étant mesurées au cours d'un état d'absence de charge du convertisseur modulaire (10).

9. Procédé selon l'une des revendications précédentes, également **caractérisé en ce que**

a) la détermination de la condition de commutation comprend les étapes consistant à

i) mesurer une première pluralité de tensions sur les premiers condensateurs de liaison CC (50) d'une première pluralité de cellules de convertisseur,

ii) mesurer une deuxième pluralité de tensions sur les deuxièmes condensateurs de liaison CC (64) de la première pluralité de cellules de convertisseur,

iii) calculer une valeur de référence à partir des pluralités de tension mesurées,

iv) stocker la valeur de référence ;

b) la détermination de l'indicateur de commutation comprend les étapes consistant à

i) mesurer la première pluralité de tensions sur les premiers condensateurs de liaison CC (50) de la première pluralité de cellules de convertisseur,

ii) mesurer la deuxième pluralité de tensions sur les deuxièmes condensateurs de liaison CC (64) de la première pluralité de cellules de convertisseur,

iii) calculer une valeur de comparaison à partir des pluralités de tension mesurées,

c) la détermination du fait que l'indicateur de commutation vérifie ou non la condition de commutation comprend l'étape consistant à

i) comparer la valeur de comparaison obtenue à l'étape b) ii) à la valeur de référence stockée à l'étape a) iii) .

10. Procédé selon la revendication précédente, également **caractérisé en ce que**

a) à l'étape a) iii), la valeur de référence est calculée selon une règle arithmétique, et

b) à l'étape b) iii), la valeur de comparaison est calculée selon la même règle arithmétique.

11. Procédé selon l'une des revendications 9 et 10, également **caractérisé en ce que**

a) à l'étape a) iii), la valeur de référence est obtenue par le calcul d'un rapport entre une somme des tensions de la première pluralité de tensions et de la deuxième pluralité de tensions, et

b) à l'étape b) iii), la valeur de comparaison est obtenue par le calcul d'un rapport entre une somme des tensions de la première pluralité de tensions et de la deuxième pluralité de tensions.

12. Procédé selon l'une des revendications précédentes, également **caractérisé en ce que** si l'indicateur de commutation vérifie la condition de commutation, une pluralité de convertisseurs CC/CC (42) sont commutés simultanément.

13. Procédé selon la revendication 12, également **ca-**

**ractérisé en ce que** si l'indicateur de commutation vérifie la condition de commutation, les convertisseurs CC/CC (42) de toutes les cellules de convertisseur (36) qui sont dans un état de fonctionnement actif sont commutés simultanément.

14. Procédé selon l'une des revendications précédentes, également **caractérisé en ce que**

a) un ou plusieurs des convertisseurs CC/CC (42) comprend

i) un ou plusieurs premiers commutateurs à semi-conducteurs (58) sur le côté primaire,

ii) un ou plusieurs deuxièmes commutateurs à semi-conducteurs (62) sur le côté secondaire,

dans lequel

b) dans le premier état de fonctionnement actif, le ou les premiers commutateurs à semi-conducteurs (58) sont commandés par impulsions, et

c) dans le deuxième état de fonctionnement actif, le ou les deuxièmes commutateurs à semi-conducteurs (62) sont commandés par impulsions.

15. Procédé selon l'une des revendications précédentes, également **caractérisé en ce que** les côtés secondaires d'au moins certaines des cellules de convertisseur (36) sont reliés en parallèle sur un côté secondaire du convertisseur modulaire.

16. Contrôleur servant à commander un convertisseur modulaire (10),

a) le convertisseur modulaire (10) comprenant une pluralité de M cellules de convertisseur (36), chaque cellule de convertisseur comprenant

i) un convertisseur CA/CC (40), dont un côté primaire représente un côté primaire de ladite cellule de convertisseur,

ii) un convertisseur CC/CC (42), dont un côté secondaire représente un côté secondaire de ladite cellule de convertisseur ; avec

iii) un côté secondaire dudit convertisseur CA/CC et un côté primaire dudit convertisseur CC/CC reliés en parallèle à un premier condensateur de liaison CC (50),

iv) un côté secondaire dudit convertisseur CC/CC relié à un deuxième condensateur de liaison CC (64) ; dans lequel

b) chaque convertisseur CC/CC (42) est conçu pour être utilisé dans au moins

i) un premier état de fonctionnement actif, dans lequel de l'énergie électrique peut entrer dans le côté primaire et sortir du côté secondaire dudit convertisseur CC/CC ; et ii) un deuxième état de fonctionnement actif, dans lequel de l'énergie électrique peut entrer dans le côté secondaire et sortir du côté primaire dudit convertisseur CC/CC ;

c) les côtés primaires des cellules de convertisseur (36) sont reliés en série, avec une première cellule de convertisseur reliée à une ligne (16) fournissant une tension de ligne CA $U(t)$ ayant une valeur de crête $\hat{U}$, et une $M$-ième cellule de convertisseur reliée à une terre (22) ;

le contrôleur étant **caractérisé en ce qu'il** est configuré pour effectuer le procédé selon une des revendications 1 à 15.

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2703208 A1
- DE 102010044322 A1
- EP 820893 A2

- US 5027264 A
- US 2007086222 A1
- WO 2014188249 A

**Non-patent literature cited in the description**

- **HIROFUMI AKAGI ; RYOHEI KITADA.** Control and Design of a Modular Multilevel Cascade BTB System Using Bidirectional Isolated DC/DC Converters. *IEEE Transactions on Power Electronics,* 01 September 2011, vol. 26 (9